# EUROPÄISCHE PATENTSCHRIFT

(11) **EP 1 840 285 B1**
(45) Veröffentlichungstag und Bekanntmachung des Hinweises auf die Patenterteilung: **18.08.2010**
(21) Anmeldenummer: 07101998.8
(22) Anmeldetag: 08.02.2007
(51) Int. Cl.: E03F 11/00

(54) **Kombinierter Fäkalien-Urin-Behälter**
Combined faeces-urine container
Récipients pour selles et urine combiné

(30) Priorität: 09.02.2006 DE 102006006226
(43) Veröffentlichungstag der Anmeldung: 03.10.2007
(73) Patentinhaber: Holzapfel, Karsten, 99425 Weimar (DE)
(72) Erfinder: Holzapfel, Karsten, 99425 Weimar (DE)
(74) Vertreter: Liedtke, Klaus

(56) Entgegenhaltungen:
- AU-A- 4 516 585
- DE-C1- 10 203 076
- FR-A1- 2 862 886
- US-A- 5 104 542
- US-A1- 2004 060 857

## Beschreibung

Die Erfindung betrifft einen Sammler für Fäkalien und Urin. Ein Sammler dieser Art ist in US 5 104 542 A gezeigt.

Die Entsorgung von menschlichen Körperausscheidungen findet in der industrialisierten Welt überwiegend über den direkten Anschluß von Toiletten an die Kanalisation oder die Zwischenlagerung der Exkremente in Sammelgruben und deren Leerung durch Entsorgungsfahrzeuge statt. Dabei treten Fäkalien im engeren Sinne (Kot) und Urin sowohl bei der Lagerung in Sammlern als auch beim Transport oder der Klärung immer miteinander und mit großen Spülwassermengen vermischt auf. In einigen Fällen, insbesondere in Entwicklungsländern oder abgelegenen Gebieten ist keine Kanalisation vorhanden. Die Trennung der Exkremente vom übrigen Abwasser ist zudem energieaufwendig und kostenintensiv. Eine dezentrale Klärung funktioniert darüberhinaus nur dann, wenn das Verhältnis von Urin und Fäkalien im engeren Sinn (Kot) ausgewogen ist. Dies ist typischerweise nicht der Fall bei öffentlichen Toiletten, z.B. an Autobahnen, bei denen wegen hygienischer Vorbehalte der Benutzer fast ausschließlich Urin anfällt. Es ist bekannt, dass eine zu hohe Urinkonzentration für die Klärung hinderlich ist. Aus menschlicher Sicht zwar Abfälle, sind Urin und Fäkalien jedoch auch wertvolle Rohstoffe. Urin ist steril, enthält große Mengen Salze und Nährstoffe aber kaum organische Bestandteile und eignet sich als Dünger in der Landwirtschaft. Fäkalien bestehen überwiegend aus organischen Stoffen und sind sehr gut kompostierbar oder in Biogasanlagen verwertbar. Nachteilig ist, dass eine Verwertung des Gemischs aus Fäkalien und Urin wirtschaftlich kaum möglich ist. Vielmehr wird regelmäßig eine gezielte Entsorgung von Fäkalien und Urin vorgenommen.

Der Erfindung liegt daher die Aufgabe zu Grunde, einen Sammler anzugeben, der eine verbesserte und vereinfachte Weiterverwertung von Fäkalien und Urin erlaubt.

Als Fäkalien sollen im engeren Sinne der Definition nur Darmausscheidungen bzw. Kot verstanden werden.

Die Aufgabe wird erfindungsgemäß gelöst durch einen Sammler mit den Merkmalen des Anspruchs 1.

Vorteilhafte Ausgestaltungen der Erfindung sind Gegenstand der Unteransprüche.

Der erfindungsgemäße Sammler ist als Basisbehälter ausgebildet, der einen wasserundurchlässigen Urinbehälter zum Sammeln von Urin und einen wasserundurchlässigen Fäkalienbehälter zum Sammeln von Fäkalien umfasst, wobei sowohl der Urinbehälter als auch der Fäkalienbehälter über mindestens eine jeweils eigene Befüllungsöffnung verfügen. Urin und Fäkalien werden getrennt gelagert und können in vorteilhafter Weise einer getrennten Behandlung zugeführt werden. Die Vorteile beider Substanzen sind jeweils dann optimal nutzbar, wenn sie nicht miteinander vermischt sind. Als Behälter soll im Folgenden ein abgegrenzter Hohlraum verstanden werden, dessen Inhalt von der Umwelt getrennt ist.

Erfindungsgemäß ist der Fäkalienbehälter ein in den Sammler eingesetztes Gefäß und der Urinbehälter aus dem restlichen Volumen des Sammlers gebildet. Hierbei wird kein separates Gefäß als Urinbehälter benötigt, Stattdessen dient der nicht vom Fäkalienbehälter beanspruchte Volumenanteil des wasserdicht ausgeführten Basisbehälters als Urinbehälter.

In einer bevorzugten Ausführungsform hat der Sammler eine kreisförmige oder rechteckige, insbesondere quadratische Grundfläche, so dass gebräuchliche Abwasserschächte zum Einsatz kommen können.

Vorzugsweise ist der Urinbehälter vom Fäkalienbehälter durch eine Trennwand in der Art einer geneigten Ebene getrennt, insbesondere so, dass die Querschnittsfläche des Fäkalienbehälters von oben nach unten abnimmt. Auf diese Weise kann das Volumenverhältnis der beiden Behälter auf das je nach Aufstellungsort unterschiedliche Benutzungsprofil der angeschlossenen Toiletten konstruktiv abgestimmt werden. Ein Mensch scheidet im Jahr etwa 50 kg Fäkalien und 500 1 Urin aus. Da Fäkalien nicht flüssig sind, wird das Volumen des Fäkalienbehälters nicht vollständig genutzt. Bei Einsatz im privaten Bereich ist ein Volumenverhältnis Urin zu Fäkalien von 2:1 zugrundezulegen. Bei öffentlichen Toiletten fällt wegen hygienischer Vorbehalte der Benutzer erfahrungsgemäß mehr Urin an, so dass hier ein anderes Volumenverhältnis gewählt werden sollte.

Diese Trennwand kann mit Aussteifungen, insbesondere auf der Seite des Urinbehälters, versehen sein, um sie für den Fall, dass die Behälter unterschiedlich hoch befüllt sind, zu stabilisieren.

Vorzugsweise liegt der Fäkalienbehälter an seinem oberen Ende mit einem flachen umlaufenden Steg auf dem Rand des Sammlers auf und arretiert sich in dieser Position bezüglich horizontaler Bewegungen selbst, so dass in dieser Richtung keine unbeabsichtigte Lageveränderung im Betrieb auftreten kann.

In einer bevorzugten Ausführungsform sind der Urinbehälter und der Fäkalienbehälter mit jeweils einer Entnahmeöffnung versehen, um die Entnahme von Urin und Fäkalien zu erleichtern, die anderenfalls über die Befüllungsöffnungen erfolgen müsste. Auf diese Weise kann die Entnahme auch räumlich getrennt von einem ggfs. direkt auf dem Sammler befindlichen Toilettensitz erfolgen.

Besonders vorteilhaft ist hierbei, ein von der jeweiligen Behältersohle mindestens bis zur dazugehörigen Entnahmeöffnung geführtes Entnahmerohr in beiden Behältern, da so dass Einführen von Saugschläuchen gebräuchlicher Entsorgungsfahrzeuge entfallen kann.

In einer Ausführungsform der Erfindung ist dazu das Entnahmerohr außerhalb der Entnahmeöffnung mit einer Kupplung für einen solchen Saugschlauch versehen.

In einer alternativen Ausführungsform, insbesondere bei der parallelen Installation mehrerer Sammler in größeren Toilettenanlagen, können die Entnahmerohre außerhalb der Entnahmeöffnung auch mit einer Hauptleitung verbunden sein, so dass der Saugschlauch nur an diese gekoppelt werden muß, um Fäkalien oder Urin aus allen angeschlossenen Sammlern zu entnehmen.

Hierzu kann zwischen Entnahmerohr und Hauptleitung außerdem ein Absperrorgan vorgesehen sein, um diese Stoffe selektiv aus einem bestimmten Sammler entnehmen zu können. Anderenfalls könnte die Entnahme nur solange erfolgen, bis der erste der angeschlossenen Behälter leer ist und von dort nur noch Luft angesaugt wird.

Bei Verwendung mehrerer Sammler kann der Urinbehälter auch eine Rohrleitung zur Verbindung mit dem Urinbehälter eines anderen Sammlers aufweisen, so dass nur an einem Sammler eine Entnahmemöglichkeit vorgesehen werden muss und sich Urinzuläufe auf alle angeschlossenen Sammler verteilen.

In einer bevorzugten Ausführungsform sind der Urinbehälter und/oder der Fäkalienbehälter mit einer Luftausströmungsöffnung zur Entlüftung versehen, um Geruchsbelästigungen durch die Befüllungsöffnungen zu verringern.

Diese Luftausströmungsöffnung wird bevorzugt mit einem Ventilator versehen, der Luft aus dem jeweiligen Behälter absaugt. Dabei ergibt sich ein konstanter Luftzug in die Behälter hinein durch die Befüllungsöffnungen, so dass Geruchsbelästigungen nahezu ausgeschlossen sind. Überdies wird durch den Luftstrom im Innern der Behälter Materialkorrosion verringert oder vermieden.

Um die Menge der einströmenden Luft über die Befüllungsöffnungen zu regulieren, kann jeder der Behälter zusätzlich mit weiteren Lufteinströmungsöffnungen versehen sein. Hierzu können auch die Entnahmeöffnungen genutzt werden.

In einer besonderen Ausführungsform sind der Urinbehälter und der Fäkalienbehälter in einem Bereich oberhalb eines maximalen Füllstandes mindestens durch eine Öffnung verbunden. Insbesondere strömt in diesem Fall die Luft über die Befüllungsöffnung des Fäkalienbehälters und dessen Lufteinströmungsöffnung ein, strömt dann durch die Öffnung in den Urinbehälter und wird dort durch die Luftausströmungsöffnung abgesaugt. Hierfür genügt ein Ventilator mit einer äußerst geringen Leistung von etwa 0.6 W, der zum Beispiel aus einer Solarzelle versorgt werden kann.

Vorzugsweise ist der Fäkalienbehälter und/oder der Urinbehälter aus Edelstahl oder Kunststoff gebildet. Edelstahl ist vor allem wegen seiner hohen Korrosionsbeständigkeit geeignet, Kunststoff ist besonders preisgünstig.

Der Sammler kann, insbesondere wenn ein herkömmlicher Abwasserschacht aus Beton verwendet wird, als Gründung für ein Toilettenhäuschen dienen, bei preisgünstiger Gestaltung des Sammlers nahezu kostenneutral gegenüber einem reinen Fundament.

Zu diesem Zweck ist der Sammler mit einem für die Grundrissform des Toilettenhäuschens geeigneten Deckel, insbesondere kreisförmig oder rechteckig, abgedeckt.

Sind Sammler und Deckel aus Beton gebildet, ergibt sich außerdem eine hohe Stabilität gegen Verformungen und gegen Auftrieb durch Grundwasser.

Dem Auftrieb, dem der Fäkalienbehälter unterliegt und der dann maximal ist, wenn er leer und der Urinbehälter gefüllt ist, muss der Deckel entgegenwirken. Entweder durch eine Verankerung mit geeigneten Befestigungselementen, wie z.B. Schrauben, im Sammler oder dadurch dass das Gewicht des Deckels mindestens so groß wie die maximal entstehende Auftriebskraft ist.

Besonders vorteilhaft ist die Verwendung eines erfindungsgemäßen Sammlers in Verbindung mit einer Trenntoilette, insbesondere einer Trockentrenntoilette. Eine Trenntoilette ist ein Toilettenbecken, in welchem Urin und Fäkalien durch eine Trennung des Beckens in einen vorderen und einen hinteren Teil getrennt werden, so dass sie einer getrennten Behandlung zugeführt werden können. Trockentrenntoiletten sind so konstruiert, dass auf Spülwasser vollständig oder weitgehend verzichtet werden kann. Auf diese Weise bleibt der Inhalt der Behälter unverdünnt und insbesondere die Fäkalien weitgehend fest. Außerdem sind die Entnahmeintervalle bei Verzicht auf Wasser länger.

Um eine sichere Trennung von Fäkalien und Urin insbesondere auf Herrentoiletten zu ermöglichen, ist zusätzlich der Einsatz eines insbesondere wasserlosen Urinals vorteilhaft. Bei öffentlichen Toiletten erhöht sich damit erfahrungsgemäß auch die Akzeptanz der Toilette. Verschmutzungen in der Umgebung nehmen ab und Sauberkeit und Hygiene in der Toilette verbessern sich.

Besonders vorteilhaft ist die Verwendung von Einstreu, insbesondere aus Holz- oder Gartenhäcksel oder Rindenmulch, wodurch die Kompostierung der Fäkalien verbessert wird. Bei vollständiger Kompostierung verrringert sich das Volumen um bis zu 90 %. Bevorzugt wird die Einstreu in regelmäßigen Zeitabständen oder bei vorgegebenen Füllständen des Fäkalienbehälters eingebracht.

Vorteilhaft für die Kompostierung ist weiterhin eine Zwangsbelüftung der Fäkalien. Hierzu kann eine Leitung oder ein Schlauch in die Sohle des Fäkalienbehälters geführt sein, die Luft oder Sauerstoff mit einem Volumenstrom zwischen 10 und 200 l/h (Äquivalent bei Normaldruck) bei geringem Überdruck im Bereich von ca. 0.1 bis 5 bar dorthin transportiert, z.B. mittels eines Kompressors. Eine Verbesserung der Kompostierung durch Belüftung führt auch zu einer Verringerung der Geruchsbelästigung, da Faulgase unter Luftabschluss entstehen. Dieses Merkmal ist auch in Kombination mit den Merkmalen des Oberbegriffs des Anspruchs 1 ohne dessen kennzeichnende Merkmale anwendbar.

Ausführungsbeispiele der Erfindung werden im Folgenden anhand von Zeichnungen näher erläutert.

Darin zeigen:
- Figur 1a: eine Draufsicht auf einen Sammler mit kreisförmiger Grundfläche und quadratischem Deckel, der als Gründung für ein Toilettenhäuschen dient,
- Figur 1b: eine Schnittansicht des Sammlers aus Figur 1a von der Seite in der dort angedeuteten Ebene A-A,
- Figur 2a: eine Draufsicht auf einen Sammler mit kreisförmiger Grundfläche und kreisförmigem Deckel ähnlich wie in den Figuren 1a und 1b, jedoch zusätzlich mit Entnahmerohren,
- Figur 2b: eine Schnittansicht des Sammlers aus Fig. 2a von der Seite in der dort angedeuteten Ebene A-A,
- Figur 3a: eine Draufsicht auf einen Sammler mit kreisförmiger Grundfläche, einer alternativen Deckelbefestigung und einer alternativen Form von Fäkalien- und Urinbehälter, zusätzlich mit Aussteifungen versehen,
- Figur 3b: eine Schnittansicht des Sammlers aus Fig. 3a von der Seite in der dort angedeuteten Ebene A-A,

Einander entsprechende Teile sind in allen Figuren mit den gleichen Bezugszeichen versehen.

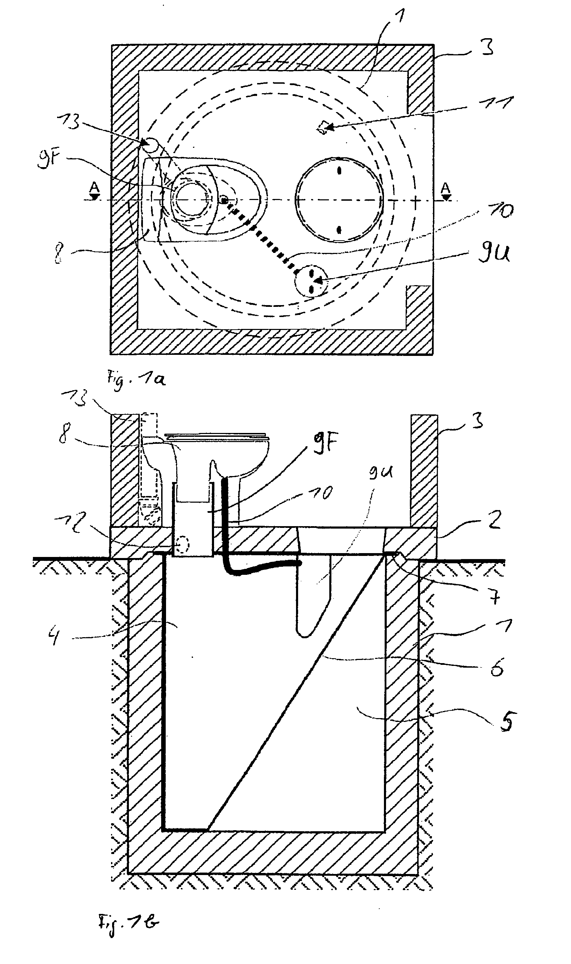

**Figur 1a** zeigt eine Draufsicht auf einen Sammler 1 mit kreisförmiger Grundfläche und einem quadratischen Deckel 2, der in der dazugehörigen Schnittansicht von der Seite in **Figur 1b** abgebildet ist. Beide Teile sind aus Beton, insbesondere Stahlbeton gebildet und dienen einem Toilettenhäuschen 3 als Gründung. Der Sammler 1 ist als ein wasserdichter Basisbehälter ausgebildet, in den ein Fäkalienbehälter 4 in Form eines aus Kunststoff gebildeten Gefäßes eingesetzt ist. Dieser liegt teilweise an der Innenwand des Sammlers 1 an. Zum aus dem verbleibenden Volumen des Sammlers 1 gebildeten Urinbehälter 5 ist er durch eine Trennwand 6 in der Art einer geneigten Ebene abgegrenzt. Diese Trennwand ist ein Teil des Gefäßes. Ein am oberen Ende des Fäkalienbehälters 4 befindliches flacher umlaufender Steg 7 des Fäkalienbehälters 4 liegt auf dem Rand des Sammlers 1 so auf, dass der Fäkalienbehälter 4 bezüglich horizontaler Bewegungen arretiert ist. Der Deckel 2 liegt formschlüssig auf dem Sammler 1 auf. Sein Gewicht ist so bemessen, dass es die maximale Auftriebskraft kompensiert, die dann auftritt, wenn der Urinbehälter voll und der Fäkalienbehälter leer ist. Auf dem Deckel ist eine Trockentrenntoilette 8 installiert, von der aus Fäkalien über eine als Fallrohr ausgebildete Befüllungsöffnung 9F dem Fäkalienbehälter zugeführt werden. Der in der Trockentrenntoilette 8 separat gesammelte Urin wird über einen Schlauch 10 der Befüllungsöffnung 9U des Urinbehälters 5 zugeführt. Diese dient in diesem Ausführungsbeispiel auch als Lufteinströmungs- und Entnahmeöffnung für den Urin, durch die ein gebräuchlicher Saugschlauch eines Entsorgungsfahrzeuges eingeführt werden kann. Die hier einströmende Luft durchströmt den Urinbehälter 5 und über die oberhalb des maximalen Füllstandes beider Behälter 4, 5 gelegene Öffnung 11 in den Fäkalienbehälter 4, den sie durch eine Luftausströmungsöffnung 12 verlässt, von wo sie mit einem Entlüftungsrohr 13 bis oberhalb des Daches des Toilettenhäuschens 3 geführt wird, so dass für einen Benutzer keine Geruchsbelästigung entsteht. Vorzugsweise wird sie dabei mit einem Ventilator (nicht abgebildet) abgesaugt, um die Luftzirkulation sicherzustellen. Hierfür genügt ein Ventilator geringer Leistung in der Größenordnung von 0,6 W, für dessen Versorgung z.B. eine Solarzelle ausreicht.

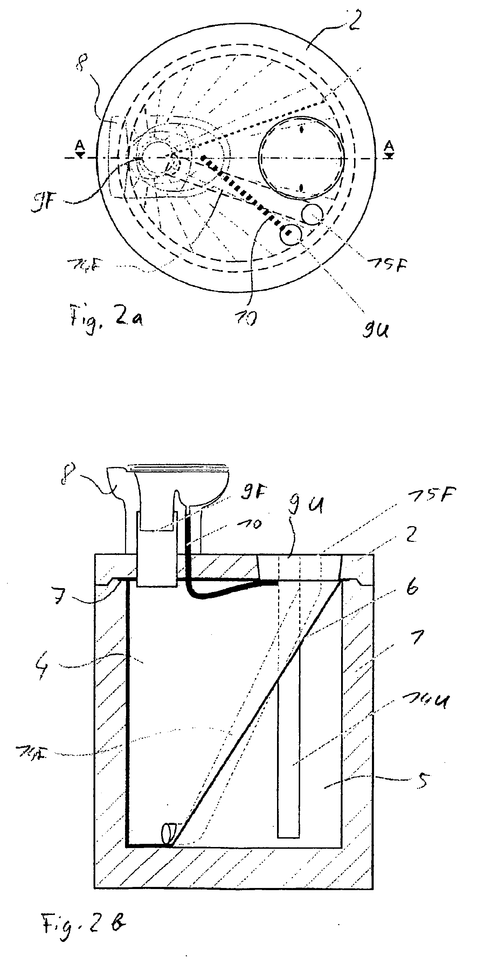

**Figur 2a** zeigt eine Draufsicht auf eine Ausführungsform eines Sammlers 1, die weitgehend der in den Figuren 1a und 1b gezeigten entspricht, jedoch zusätzlich ein Entnahmerohr 14F für den Fäkalienbehälter 4 und ein Entnahmerohr 14U für den Urinbehälter enthält. **Figur 2b** zeigt eine dazugehörige Schnittdarstellung. Beide Entnahmerohre 14F, 14U sind von der jeweiligen Behältersohle bis außerhalb ihrer jeweiligen Entnahmeöffnungen geführt, wo sie Kupplungen (nicht gezeigt) zum Anschluß herkömmlicher Saugschläuche von Entsorgungsfahrzeugen aufweisen können. Die Befüllungsöffnung 9U des Urinbehälters 5 dient hierbei auch zur Entnahme, der Fäkalienbehälter 4 weist eine separate Entnahmeöffnung 15F auf. Alternativ können die Entnahmerohre 14F, 14U dort auch an Hauptleitungen angeschlossen sein, die mehrere solcher Sammler verbinden. In diesem Fall sind vorzugsweise Absperrelemente zwischen Entnahmerohr und Hauptleitung vorzusehen.

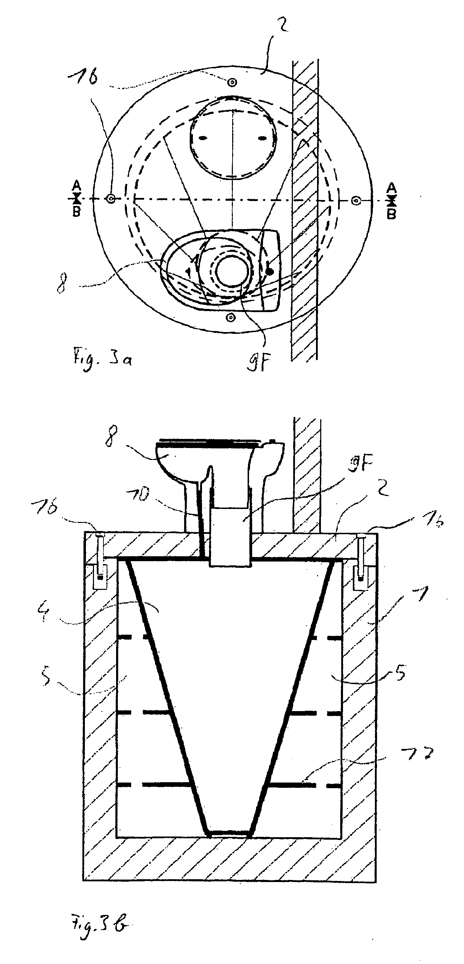

**Figur 3a** zeigt eine Draufsicht auf eine weitere Ausführungsform eines Sammlers 1, bei dem der Deckel 2 jedoch mittels Schrauben als Befestigungselementen 16 im Sammler 1 verankert ist, die zumindest einen Teil der genannten Auftriebskräfte übernehmen können, so dass der Deckel 2 leichter dimensioniert werden kann, als in den Ausführungsbeispielen aus den Figuren 1a, 1b, 2a und 2b. **Figur 3b** zeigt eine dazugehörige Schnittdarstellung. Der Fäkalienbehälter 4 hat in dieser Ausführungsform im Wesentlichen die Form eines sich nach unten verjüngenden Kegelstumpfes. Das restliche Volumen des Sammlers 1 dient als Urinbehälter 5. In dessen Bereich hineinragend weist der Fäkalienbehälter 4 Aussteifungen 17 auf, die einer Verformung des Fäkalienbehälters 4 entgegenwirken, die anderenfalls bei unterschiedlicher Füllhöhe in den Behältern 4, 5 auftreten kann. Die Aussteifungen 17 sind so gestaltet, dass ein senkrechter Transport von Urin möglich ist. Außerdem muss ihre Ausführung die Anordnung eines hier nicht gezeigten Entnahmerohres oder das Einführen eines Saugschlauches ermögfichen.

Alle gezeigten und weitere mögliche Ausführungsformen von Sammlern können zusätzlich mit Urinalen, insbesondere wasserlosen Urinalen ausgestattet sein, die z.B. mittels Schläuchen mit der Befüllungsöffnung 9U des Urinbehälters 5 verbunden sind.

Weiterhin können separate Befüllungs- und Entnahme- und Lufteinströmungsöffnungen auch für beide Behälter 4, 5 vorgesehen sein.

Ebenso sind Sammler 1 mit einer anderen, insbesondere rechteckigen oder quadratischen Grundfläche möglich.

Der Urinbehälter 5 kann zusätzlich oder alternativ zu einer Entnahmeöffnung mittels einer Rohrleitung mit anderen Urinbehältern weiterer Sammler verbunden sein, so dass die Entnahme nur an einem dieser Sammler vorgenommen werden muß.

Der Fäkalienbehälter wird aus Kostengründen zumeist aus Kunststoff gebildet sein, alternativ können aber auch andere Stoffe, z.B. Edelstahl verwendet werden.

Einstreu zur Verbesserung der Kompostierung der Fäkalien kann ebenfalls bei allen denkbaren Ausführungsformen zum Einsatz kommen. Hierzu wird zum Beispiel vor der ersten Benutzung eine Schicht Einstreu in Form von Holz- oder Gartenhäcksel oder Rindenmulch in den Fäkalienbehälter eingebracht. Dies wird bis zur nächsten Entnahme in regelmäßigen Zeitabständen oder bei bestimmten Füllstanden wiederholt.

Ebenso kann der Fäkalienbehälter zwangsbelüftet werden, um die Kompostierung zusätzlich zu verbessern. Hierzu wird z.B. eine Leitung oder ein Schlauch in die Sohle des Fäkalienbehälters geführt, die Luft oder Sauerstoff mit einem Volumenstrom zwischen 10 und 200 l/h (Äquivalent bei Normaldruck) bei geringem Überdruck im Bereich von ca. 0.1 bis 5 bar dorthin transportiert, z.B. mittels eines Kompressors. Dieses Merkmal ist auch in Kombination mit den Merkmalen des Oberbegriffs des Anspruchs 1 ohne dessen kennzeichnende Merkmale anwendbar.

### BEZUGSZEICHENLISTE

- 1: Sammler
- 2: Deckel
- 3: Toilettenhäuschen
- 4: Fäkalienbehälter
- 5: Urinbehälter
- 6: Trennwand
- 7: Steg
- 8: Trockentrenntoilette
- 9F: Befüllungsöffnung des Fäkalienbehälters
- 9U: Befüllungsöffnung des Urinbehälters
- 10: Schlauch
- 11: Öffnung
- 12: Luftausströmungsöffnung
- 13: Entlüftungsrohr
- 14F: Entnahmerohr für Fäkalienbehälter
- 14U: Entnahmerohr für Urinbehälter
- 15F: Entnahmeöffnung für Fäkalienbehälter
- 16: Befestigungselement
- 17: Aussteifung

## Patentansprüche

1. Sammler für Fäkalien und Urin, **dadurch gekennzeichnet, dass** der Sammler als Basisbehälter ausgebildet ist, der einen wasserundurchlässigen Urinbehälter zum Sammeln von Urin und einen wasserundurchlässigen Fäkalienbehälter zum Sammeln von Fäkalien umfasst, **dadurch gekennzeichnet, dass** sowohl der Urinbehälter als auch der Fäkalienbehälter über mindestens eine jeweils eigene Befüllungsöffnung zur getrennten Lagenung des Urins beziehungsweise der Fäkalien verfügen, wobei der Fäkalienbehälter ein in den Sammler eingesetztes Gefäß und der Urinbehälter aus dem restlichen Volumen des Sammlers gebildet ist.

2. Sammler nach Anspruch 1, **dadurch gekennzeichnet, dass** die Grundfläche des Sammlers kreisförmig ist.

3. Sammler nach Anspruch 1, **dadurch gekennzeichnet, dass** die Grundfläche des Sammlers rechteckig ist.

4. Sammler nach einem der vorhergehenden Ansprüche, **dadurch gekennzeichnet, dass** der Urinbehälter vom Fäkalienbehälter durch eine Trennwand in der Art einer geneigten Ebene getrennt ist.

5. Sammler nach Anspruch 4, **dadurch gekennzeichnet, dass** die Querschnittsfläche des Fäkalienbehälters von oben nach unten abnimmt.

6. Sammler nach einem der vorhergehenden Ansprüche, **dadurch gekennzeichnet, dass** der Fäkalienbehälter oder die Trennwand mit mindestens einer Aussteifung versehen ist.

7. Sammler nach einem der vorhergehenden Ansprüche, **dadurch gekennzeichnet, dass** der Fäkalienbehälter an seinem oberen Ende mit einem flachen umlaufenden Steg auf dem Rand des Sammlers aufliegt und sich in dieser Position bezüglich horizontaler Bewegungen selbst arretiert.

8. Sammler nach einem der vorhergehenden Ansprüche, **dadurch gekennzeichnet, dass** der Urinbehälter und der Fäkalienbehälter mit jeweils einer Entnahmeöffnung versehen sind.

9. Sammler nach einem der vorhergehenden Ansprüche, **dadurch gekennzeichnet, dass** im Urinbehälter und/oder im Fäkalienbehälter ein Entnahmerohr von der jeweiligen Behältersohle mindestens bis zur dazugehörigen Entnahmeöffnung oder Befüllungsöffnung geführt ist.

10. Sammler nach einem der vorhergehenden Ansprüche, **dadurch gekennzeichnet, dass** der Urinbehälter und/oder der Fäkalienbehälter mit mindestens einer Luftausströmungsöffnung zur Entlüftung versehen sind.

11. Sammler nach Anspruch, **dadurch gekennzeichnet, dass** die Luftausströmungsöffnung mit einem Ventilator versehen ist.

12. Sammler nach einem der Ansprüche 10 oder 11, **dadurch gekennzeichnet, dass** der Urinbehälter und/oder der Fäkalienbehälter mit mindestens einer Lufteinströmungsöffnung versehen ist.

13. Sammler nach einem der vorhergehenden Ansprüche, **dadurch gekennzeichnet, dass** der Urinbehälter und der Fäkalienbehälter in einem Bereich oberhalb eines maximalen Füllstandes durch mindestens eine Öffnung verbunden sind.

14. Sammler nach einem der vorhergehenden Ansprüche, **dadurch gekennzeichnet, dass** der Sammler einen kreisförmigen oder rechteckigen Deckel aufweist.

15. Sammler nach Anspruch 14, **dadurch gekennzeichnet, dass** der Deckel mittels Befestigungselementen im Sammler verankert ist.

16. Sammler nach einem der Ansprüche 14 oder 15, **dadurch gekennzeichnet, dass** das Gewicht des Deckels mindestens so groß wie die Auftriebskraft ist, die bei gefülltem Urinbehälter und leerem Fäkalienbehälter entsteht.

## Claims

1. A container for faeces and urine, **characterised in that** the container is formed as basis box comprising a waterproof urine container for collecting urine and a waterproof faeces container for collecting faeces, **characterised in that** both the urine container and the faeces container dispose of at least one respective own fill opening for a separated storage of urine and accordingly faeces, whereas the faeces container is a bin inserted in the container and the urine container is formed of the residual volume of the container.

2. The container of claim 1, **characterised in that** the container's surface area is circular.

3. The container of claim 1, **characterised in that** the container's surface area is rectangular.

4. The container of one of the preceding claims, **characterised in that** the urine container is separated by the faeces container by a centre division of a kind of an inclined plane.

5. The container of claim 4, **characterised in that** the faeces container's cross-sectional area declines top down.

6. The container of one of the preceding claims, **characterised in that** the faeces container or the centre division is provided with at least one bracing.

7. The container of one of the preceding claims, **characterised in that** the plane wrapping web of the upper end of the faeces container rests on the container's edge, self arresting in this position in relation to horizontal movements.

8. The container of one of the preceding claims, **characterised in that** the urine container and the faeces container are provided with one respective extraction opening.

9. The container of one of the preceding claims, **characterised in that** an extraction tube is led in the urine container and/or in the faeces container from the respective container base to at least the corresponding extraction opening or fill opening.

10. The container of one of the preceding claims, **characterised in that** the urine container and/or the faeces container is provided with at least one air outlet opening for ventilation purposes.

11. The container of claim 10, **characterised in that** the air outlet opening is provided with a ventilator.

12. The container of one of the claims 10 or 11, **characterised in that** the urine container and/or the faeces container is provided with at least one air inlet opening.

13. The container of one of the preceding claims, **characterised in that** the urine container and the faeces container are connected by at least one opening in an area above a maximal fill level.

14. The container of one of the preceding claims, **characterised in that** the container comprises a circular or rectangular lid.

15. The container of claim 14, **characterised in that** the lid is anchored in the container by means of mounting elements.

16. The container of one of the claims 14 or 15, **characterised in that** the lid's weight is at least as big as the lifting force arising when the urine container is filled and the faeces container is empty.

## Revendications

1. Collecteur pour matières fécales et urines, **caractérisé en ce que** ledit collecteur est réalisé comme récipient de base, lequel contient un récipient à urines imperméable à l'eau pour la collecte d'urines et un récipient de matières fécales imperméable à l'eau pour la collecte des matières fécales, **caractérisé en ce que** le récipient d'urines ainsi que le récipient de matières fécales disposent chacun d'au moins une ouverture de remplissage propre pour le stockage séparé des urines ou des matières fécales, le récipient de matières fécales étant une cuve mise en place dans le collecteur et le récipient d'urines étant formé par le volume de collecteur restant.

2. Collecteur selon la revendication 1, **caractérisé en ce que** la surface de base du collecteur est circulaire.

3. Collecteur selon la revendication 1, **caractérisé en ce que** la surface de base du collecteur est rectangulaire.

4. Collecteur selon l'une des revendications précédentes, **caractérisé en ce que** le récipient d'urines est séparé du récipient de matières fécales par une paroi de séparation à la manière d'un plan incliné.

5. Collecteur selon la revendication 4, **caractérisé en ce que** la surface de section transversale du récipient de matières fécales décroît du haut vers le bas.

6. Collecteur selon l'une des revendications précédentes, **caractérisé en ce que** le récipient de matières fécales ou la paroi de séparation sont pourvus d'au moins un élément de raidissement.

7. Collecteur selon l'une des revendications précédentes, **caractérisé en ce que** le récipient de matières fécales repose sur le bord du collecteur à son extrémité supérieure par une bride périphérique plate et se bloque lui-même dans cette position par rapport à des déplacements horizontaux.

8. Collecteur selon l'une des revendications précédentes, **caractérisé en ce que** le récipient d'urines et le récipient de matières fécales sont pourvus chacun d'une ouverture de prélèvement.

9. Collecteur selon l'une des revendications précédentes, **caractérisé en ce qu'une** conduite de prélèvement traverse le récipient d'urines et/ou le récipient de matières fécales, depuis le fond de récipient respectif vers au moins l'ouverture de prélèvement ou l'ouverture de remplissage correspondante.

10. Collecteur selon l'une des revendications précédentes, **caractérisé en ce que** le récipient d'urines et/ou le récipient de matières fécales sont pourvus d'au moins une ouverture d'évacuation d'air destinée à l'aération.

11. Collecteur selon la revendication 10, **caractérisé en ce que** l'ouverture d'évacuation d'air est pourvue d'un ventilateur.

12. Collecteur selon l'une des revendications 10 ou 11, **caractérisé en ce que** le récipient d'urines et/ou le récipient de matières fécales sont pourvus d'au moins une ouverture d'admission d'air.

13. Collecteur selon l'une des revendications précédentes, **caractérisé en ce que** le récipient d'urines et le récipient de matières fécales sont reliés par au moins une ouverture dans une zone située au-dessus d'un niveau de remplissage maximal.

14. Collecteur selon l'une des revendications précédentes, **caractérisé en ce que** le collecteur comporte un couvercle circulaire ou rectangulaire.

15. Collecteur selon la revendication 14, **caractérisé en ce que** le couvercle est ancré par des éléments de fixation dans le collecteur.

16. Collecteur selon l'une des revendications 14 ou 15, **caractérisé en ce que** le poids du couvercle est au moins équivalent à la force ascensionnelle générée lorsque le récipient d'urines est plein et le récipient de matières fécales vide.
